# EUROPÄISCHE PATENTSCHRIFT

(11) **EP 3 044 263 B1**
(45) Veröffentlichungstag und Bekanntmachung des Hinweises auf die Patenterteilung: **29.04.2020**
(21) Anmeldenummer: 14761655.1
(22) Anmeldetag: 10.09.2014
(51) Int. Cl.: C08L 69/00

(54) **DIMENSIONSSTABILE POLYCARBONAT-POLYALKYLENTEREPHTHALAT-FORMMASSEN**
DIMENSIONALLY STABLE POLYCARBONATE - POLYALKYLENE TEREPHTHALATE MOULDING MATERIALS
MASSES MOULÉES EN POLYCARBONATE-POLYALKYLÈNETÉRÉPHTALATE AUX DIMENSIONS STABLES

(30) Priorität: 11.09.2013 EP 13183941
(43) Veröffentlichungstag der Anmeldung: 20.07.2016
(73) Patentinhaber: Covestro Deutschland AG, 51373 Leverkusen (DE)
(72) Erfinder: HUFEN, Ralf, 47239 Duisburg (DE); ECKEL, Thomas, 41540 Dormagen (DE); FRANZ, Uli, 42659 Solingen (DE)
(74) Vertreter: Levpat
(86) Internationale Anmeldenummer: PCT/EP2014/069245
(87) Internationale Veröffentlichungsnummer: WO 2015/036413

(56) Entgegenhaltungen:
- EP-A1- 1 992 663
- JP-A- 2010 275 449
- US-A- 5 637 643
- DATABASE WPI Week 199514 Thomson Scientific, London, GB; AN 1995-101623 XP002718977, & JP H07 25241 A (MITSUBISHI MOTOR CORP) 27. Januar 1995 (1995-01-27) in der Anmeldung erwähnt
- DATABASE WPI Week 199412 Thomson Scientific, London, GB; AN 1994-097985 XP002718978, & JP H06 49343 A (MITSUBISHI KASEI CORP) 22. Februar 1994 (1994-02-22) in der Anmeldung erwähnt

## Beschreibung

Die vorliegende Erfindung betrifft dimensionsstabile Zusammensetzungen auf Basis von Polycarbonat- Polyalkylenterephthalat-Blends die als mineralischen Füllstoff Talk die als Additive mindestens ein Entformungsmittel und mindestens einen Stabilisator enthalten.
enthalten. Darüber hinaus betrifft die vorliegende Erfindung die Verwendung der thermoplastischen Formmassen zur Herstellung von dimensionsstabilen Halbzeugen und Formteilen, sowie die aus den thermoplastischen Formmassen erhältlichen Halbzeuge und Formteile. Die Halbzeuge und Formteile finden vorzugsweise Anwendung im Automobilbau, weiter bevorzugt als Exterior-Bauteil.

Füllstoffhaltige Polycarbonatformmassen (PC-Formmassen), die teilkristalline Polyester und mineralische Füllstoffe enthalten, sind bekannt. Derartige Formmassen werden zum Beispiel im Automobilsektor eingesetzt.

EP 1 992 663 A1 offenbart Polycarbonat-Zusammensetzungen enthaltend einen weiteren Thermoplasten und Talk. Als weitere Thermoplasten sind auch Polyester offenbart. Die Zusammensetzungen zeichnen sich durch eine einfache Herstellung im Extrusionsverfahren, Steifigkeit, Flammschutz, Zähigkeit und thermische Stabilität aus.

US 5,637,643 offenbart Zusammensetzungen enthaltend Polycarbonat, Polyester und oberflächenmodifizierten Talk, sowie einen Antioxidant auf Phosphitbasis. Die Zusammensetzungen zeichnen sich durch gute mechanische Eigenschaften und gute thermische Stabilität aus.

JP 2010-275449 offenbart Zusammensetzungen enthaltend Polycarbonat, Polyester, Talk und Carbonfaser. Als Vergleich werden auch Zusammensetzungen ohne Carbonfaser offenbart. Die erfindungsgemäßen Zusammensetzungen zeichnen sich durch eine niedrige thermische Ausdehnung, hohe Steifigkeit und gute Oberflächeneigenschaften aus.

JP-H-0725241 A offenbart Zusammensetzungen enthaltend Polycarbonate, Polyester, Acrylat-Kautschuk und Talk sowie Antioxidant. Die Zusammensetzungen eignen sich zur Herstellung von Fahrzeugteilen und zeichnen sich durch eine hohe Steifigkeit sowie gute Oberflächenglätte aus.

JP-H-0649343 A offenbart Zusammensetzungen enthaltend Polycarbonat, Talk, aromatischen Polyester und organischen Phosphorsäurester. Die Zusammensetzungen haben eine hohe Steifigkeit, gute Oberflächeneigenschaften und hohe Zähigkeit und eignen sich zur Herstellung von Formkörpern mit hoher thermischer Stabilität und mechanischer Stärke.

Keine dieser Dokumente offenbart Zusammensetzungen, die als Additive mindestens ein Entformungsmittel und mindestens einen Stabilisator enthalten.

In der DE-A 19 753 541 werden Polycarbonatformmassen, die teilaromatische Polyester, Pfropfcopolymerisate und mineralische Füllstoffe enthalten, offenbart, die eine für Karosserieaußenteile ausreichende Zähigkeit, aufweisen. Jedoch zeigen die beanspruchten Formmassen unzureichende Wärmeformbeständigkeiten auf.

In EP-A 135 904 werden Polycarbonatformmassen, die Polyethylenterephthalat, Pfropfcopolymerisate auf Polybutadien-Basis und Talk einer Menge bis zu 4 Gew.-% enthalten, beschrieben. Als Vorteil wird eine günstige Eigenschaftskombination aus geringem Verzug ("warpage") und guter Zähigkeit offentbart.

In JP-A 08 176 339 werden Polycarbonatformmassen, die Talk als mineralischen Füllstoff enthalten, beschrieben. ABS-Harze, Polyethylenterephthalat und Polybutylenterephthalat können als weitere Blendpartner eingesetzt werden. Als Vorteil der Formmassen werden gute Schlagzähigkeit und Oberflächenqualität herausgestellt.

In JP-A 07 025 241 werden Polycarbonatformmassen beschrieben, die eine hohe Steifigkeit und gute Oberflächenqualität aufweisen. Die Formmassen enthalten 60 bis 70 Gew.-% Polycarbonat, 20 bis 30 Gew.-% Polyester, 5 bis 10 Gew.-% Acrylat-kautschuk und 5 bis 10 Gew.-% Talk sowie 0,1 bis 1 Gew.-Teil (bezogen auf 100 Teile Polymer-Komponenten) Antioxidans.

JP-A 63 132 961 offenbart, die Polybutylenterephthalat, Polyester, Pfropfcopolymerisate und mineralische Füllstoffe enthalten, für Anwendungen im Automobilbereich.

EP 1 355 988 A1 offenbart Polycarbonatformmassen, die gegebenenfalls Polyester und/oder Pfropfcopolymerisate enthalten können, die einen Gesamteisengehalt von weniger als 100 ppm - im wesentlichen resultierend aus zugesetztem Talk - aufweisen.

Karosserieaußenteile aus Kunststoffen müssen in der Regel lackiert werden. Im Falle wagenfarbig eingefärbter Kunststoffe werden die daraus hergestellten Karosserieanbauteile in der Regel mit einer oder mehreren Schichten durchsichtiger Lacke überzogen. Im Falle nicht wagenfarbig eingefärbter Kunststoffe werden die daraus hergestellten Karosserieanbauteile mit mehreren Lackschichten lackiert, wobei mindestens eine der Schichten farbgebend ist. Die aufgetragenen Lackschichten müssen in der Regel bei erhöhter Temperatur eingebrannt und ausgehärtet werden. Die dafür benötigte Temperatur, die bis zu 200°C betragen kann, und Dauer sind abhängig von den verwendeten Lacksystemen. Das Kunststoffmaterial der Karosserieanbauteile darf während dem Aushärt- bzw. Einbrennvorgang möglichst keine Veränderungen, wie z.B. irreversible Verformungen, aufzeigen. Daher ist es erforderlich, thermoplastische Polycarbonatformmassen mit hoher Wärmeformbeständigkeit bereitzustellen.

Darüber hinaus müssen die Bauteile auch im täglichen Gebrauch eine hohe Dimenstionsstabilität, insbesondere eine geringe thermische Ausdehnung (geringer CLTE - Coefficient of Linear Thermal Expansion), in allen Dimensionen aufweisen

Weitere Anforderungen, die an Karosserieanbauteile aus Kunststoffen gestellt werden, sind gute Zähigkeit bei Schlag- und Zugbelastung, insbesondere auch bei tiefen Temperaturen, ausreichende Steifigkeit, gute Oberflächenqualität, gute Lackierbarkeit mit guter Lackhaftung und gute Chemikalien- und Kraftstoffbeständigkeit. Die zur Herstellung der Karosserieaußenteile verwendeten Formmassen müssen zudem eine gute Fließfähigkeit in der Schmelze aufweisen.

Die Erfahrung aus der Praxis zeigt, dass für Karosserieanbauteile eingesetzte Materialien je nach konkretem Einsatzgebiet große Variationen in den aufgezählten Eigenschaften aufweisen können. Letztendlich entscheidend und sehr wichtig bei allen Materialien ist jedoch eine ausreichende Wärmeformbeständigkeit und Dimensionsstabilität, um eine problemlose Lackierung zu ermöglichen und einen Verzug der Bauteile mit Rißbildung und Veränderung der Spaltmaße zu verhindern.

Aufgabe war die Entwicklung von dimensionsstabilen Polycarbonat/ Polyalkylenterephthalat-Zusammensetzungen mit geringem CLTE, vorzugsweise in allen Dimensionen, in Kombination mit guter Schlagzähigkeit, hohem E-Modul, guter Fließ fähigkeit, hoher Wärmeformbeständigkeit und reduziertem Schwindungsverhalten bei der thermoplastischen Verarbeitung.

Weiterhin sollten die Polycarbonatformmassen ein ausgezeichnetes Gesamteigenschaftsprofil einschließlich der Lackhaftung für Karosserieanbauteile aus Kunststoffen in Bezug auf die im Abschnitt vorher genannte Anforderungen aufweisen. Die Polycarbonatformmassen sollten sich zudem leicht zu großteiligen Formteilen verarbeiten lassen, die für den Einsatz als Karosserieanbauteile geeignet sind.

Es wurde nun gefunden, dass Zusammensetzungen enthaltend Polyalkylenterephthalat in Kombination mit Polycarbonat, und Talk als mineralischen Füllstoff die geforderten Eigenschaften aufweisen.

Die vorliegende Erfindung betrifft Zusammensetzungen, enthaltend
A) 50 bis 70, vorzugsweise 52 bis 68, besonders bevorzugt 54 bis 66, insbesondere 55 bis 65 Gew.-Teile, mindestens ein aromatisches Polycarbonat,
B) 16 bis 30, vorzugsweise größer 18 bis 28, besonders bevorzugt 20 bis 26, insbesondere 21 bis 25 Gew.-Teile, mindestens ein Polyalkylenterephthalat,
C) 4 bis 30, vorzugsweise 5 bis 25, besonders bevorzugt 8 bis 22, insbesondere 9 bis 21 Gew.-Teile, am meisten bevorzugt 12 bis 18 Gew.-Teile, mindestens einen mineralischen Füllstoff auf Basis von Talk,
D) 0,1 - 8,0 Gew.-Teile, bevorzugt von 0,3 - 7,0 Gew.-Teile, bevorzugt 0,4 - 6,0 Gew.-Teile, besonders bevorzugt 0,5 - 5,0 Gew.-Teile Additive,
   wobei die Komponente D mindestens ein Entformungsmittel und mindestens einen Stabilisator enthält,
wobei die Summe der Gewichtsteile aller Komponenten 100 ergibt.

Die einzelnen oben genannten Vorzugsbereiche unterschiedlicher Komponenten sind frei miteinander kombinierbar.

In einer bevorzugten Ausführungsform besteht die Zusammensetzung nur aus den Komponenten A bis D.

In einer bevorzugten Ausführungsform ist die Zusammensetzung frei von kautschukmodifizierten Pfropfpolymerisaten.

Frei von kautschukmodifizierten Pfropfpolymerisaten bedeutet, dass weniger als 0,5 Gew.-Teile, bevorzugt weniger als 0,1 Gew.-Teile dieser Komponente in der Zusammensetzung enthalten sind.

In einer bevorzugten Ausführungsform ist die Zusammensetzung frei von Vinyl(Co)-polymerisaten, insbesondere SAN (Styrol-Acrylnitril).

Frei von Vinyl(Co)-polymerisaten, insbesondere SAN (Styrol-Acrylnitril) bedeutet, dass weniger als 0,5 Gew.-Teile, bevorzugt weniger als 0,1 Gew.-Teile dieser Komponente in der Zusammensetzung enthalten sind.

In einer bevorzugten Ausführungsform ist die Zusammensetzung frei von Vinyl(Co)-polymerisaten und kautschukmodifizierten Pfropfpolymerisaten.

Frei von Vinyl(Co)-polymerisaten und frei von kautschukmodifizierten Pfropfpolymerisaten bedeutet, dass weniger als 0,5 Gew.-Teile, bevorzugt weniger als 0,1 Gew.-Teile dieser Komponenten in der Zusammensetzung enthalten sind

In einer bevorzugten Ausführungsform ist die Zusammensetzung frei Phosphor-basierten Flammschutzmitteln.

Frei von Phosphor-basierten Flammschutzmitteln bedeutet, dass weniger als 0,5 Gew.-Teile, bevorzugt weniger als 0,1 Gew.-Teile dieser Komponente in der Zusammensetzung enthalten sind.

In einer bevorzugten Ausführungsform ist die Zusammensetzung frei von Carbonfaser.

Frei von Carbonfasern bedeutet, dass weniger als 0,5 Gew.-Teile, bevorzugt weniger als 0,1 Gew.-Teile dieser Komponente in der Zusammensetzung enthalten sind.

Das Gewichtsverhältnis von Komponente C zu Komponente B beträgt vorzugsweise von 1:1 bis 1:2,5.

In einer weiteren bevorzugten Ausführungsform werden als Komponente B Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate eingesetzt.

In einer weiteren bevozugten Ausführungsform wird als Komponente B Polyethylenterphthalat eingesetzt.

In einer weiteren bevorzugten Ausführungsform enthalten die Zusammensetzungen,
A) 55 bis 65 Gew.-Teile, mindestens ein aromatisches Polycarbonat,
B) 21 bis 25 Gew.-Teile, mindestens ein Polyethylenterephthalat,
C) 9 bis 21 Gew.-Teile, mindestens einen mineralischen Füllstoff auf Basis von Talk mit einer oberen Teilchengröße d₉₅ kleiner 4,5 µm,
D) 0,5 - 5,0 Gew.-Teile Additive,
   wobei die Komponente D mindestens ein Entformungsmittel und mindestens einen Stabilisator enthält,
wobei die Zusammensetzungen frei von kautschukmodifizierten Pfropfpolymerisaten, frei von Vinyl(Co)-polymerisaten, frei von Phosphor-basierten Flammschutzmitteln und frei von Carbonfasern sind,
und wobei die Summe der Gewichtsteile aller Komponenten 100 ergibt.

In einer weiteren bevorzugten Ausführungsform bestehen die Zusammensetzungen aus:
A) 55 bis 65 Gew.-Teile, mindestens einem aromatischem Polycarbonat,
B) 21 bis 25 Gew.-Teile, mindestens einem Polyethylenterephthalats,
C) 9 bis 21 Gew.-Teile, mindestens einem mineralischen Füllstoff auf Basis von Talk mit einer oberen Teilchengröße d₉₅ kleiner 4,5 µm,
D) 0,5 - 5,0 Gew.-Teile Additive ausgewählt aus der Gruppe, die, Gleit- und Entformungsmittel, Nukleiermittel, Stabilisatoren, Antistatika, Farbstoffe, Pigmente und Füll- und Verstärkungsstoffe verschieden von Komponente C) umfasst,
   wobei die Komponente D mindestens ein Entformungsmittel und mindestens einen Stabilisator enthält,
   wobei die Komponente D keine Carbonfasern enthält,
und wobei die Summe der Gewichtsteile aller Komponenten 100 ergibt

In einer weiteren bevorzugten Ausführungsform bestehen die Zusammensetzungen aus:
E) 55 bis 65 Gew.-Teile, mindestens eines aromatisches Polycarbonats,
F) 21 bis 25 Gew.-Teile, mindestens eines Polyethylenterephthalats,
G) 9 bis 21 Gew.-Teile, mindestens eines mineralischen Füllstoffs auf Basis von Talk mit einer oberen Teilchengröße d₉₅ kleiner 4,5 µm,
H) 0,5 - 5,0 Gew.-Teile Additive ausgewählt aus der Gruppe, die, Gleit- und Entformungsmittel, Nukleiermittel, Stabilisatoren, Antistatika, Farbstoffe, Pigmente und Füll- und Verstärkungsstoffe verschieden von Komponente C) umfasst,
   wobei die Komponente D mindestens ein Entformungsmittel und mindestens zwei Stabilisatoren enthält, wobei der zweite Stabilisator eine brönstedt-saure Verbindung enthält,
   wobei die Komponente D keine Carbonfasernenthält,
und wobei die Summe der Gewichtsteile aller Komponenten 100 ergibt.

Die bevorzugten Ausführungsformen der vorliegenden Erfindung können einzeln oder auch miteinanderverknüpft ausgeführt werden.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 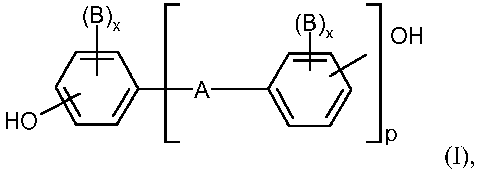 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 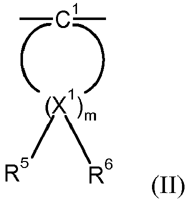 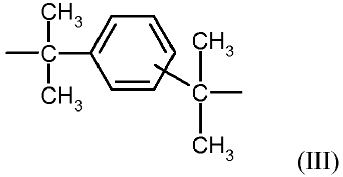
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzo le sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel M_{w}, gemessen durch GPC (Gelpermeationschromatographie) mit Polycarbonatstandard) von 15.000 bis 39.000 g/mol, vorzugsweise 19.000 bis 32.000 g/mol, besonders bevorzugt 20.000 bis 30.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt
sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Erfindungsgemäß sind Komponente B Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Besonders bevorzugt wird Polyethylenterephthalat als Komponente B verwendet.

Die vorzugsweise verwendeten Polyalkylenterephthalate besitzen bevorzugt eine intrinsische Viskosität von 0,4 bis 1,5 dl/g, vorzugsweise 0,5 bis 1,2 dl/g im Ubbelohde-Viskosimeter gemessen in Dichloressigsäure in einer Konzentration von 1 Gew.-% bei 25°C gemäß DIN 53728-3. Die ermittelte intrinsische Viskosität ist berechnet aus der gemessenen spezifischen Viskosität x 0,0006907 + 0,063096.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente C

Als Komponente C enthalten die thermoplastischen Formmassen Talk und/oder mineralische Füllstoffe auf Basis von Talk als Verstärkungsstoff oder eine Mischung der vorhergenannten Verstärkungsstoffe und mindestens einem weiterem Verstärkungsstoff nicht auf Basis von Talk.
Der weitere Verstärkungsstoff ist ausgewählt aus der Gruppe bestehend aus Glimmer, Silikat, Quarz, Titandioxid, Kaolin, amorphe Kieselsäuren, Magnesiumcarbonat, Kreide, Feldspat, Bariumsulfat, Glaskugeln, Keramikkugeln, Kohlenstofffasern und Glasfasern.
In bevorzugter Ausführungsform ist Talk oder ein mineralischer Füllstoff auf Basis von Talk alleiniger Verstärkungsstoff.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.
Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-%, bezogen auf die Gesamtmasse an Füllstoff aufweisen.

Unter Talk wird ein natürlich vorkommender oder synthetisch hergestellter Talk verstanden.
Reiner Talk hat die chemische Zusammensetzung 3 MgO · 4 SiO₂ · H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.
Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.
Besonders bevorzugte als Komponente C zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%.

Die besonders bevorzugten Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße d₅₀ von 0,1 bis 20 µm, bevorzugt 0,2 bis 10 µm, weiter bevorzugt 0,5 bis 5 µm, noch weiter bevorzugt 0,7 bis 2,5 µm, und besonders bevorzugt 1,0 bis 2,0 µm.

Die erfindungsgemäß einzusetzenden mineralischen Füllstoffe auf Basis von Talk haben bevorzugt eine obere Teilchen- bzw. Korngröße d₉₅ kleiner 10 µm, bevorzugt kleiner 7 µm, besonders bevorzugt kleiner 6 µm und insbesondere bevorzugt kleiner 4,5 µm. Die d₉₅- und d₅₀-Werte von den Füllstoffen werden nach Sedimentationsanalyse mit SEDIGRAPH D 5 000 nach ISO 13317-3 bestimmt.

Die mineralischen Füllstoffe auf Basis von Talk können optional oberflächenbehandelt sein, um eine bessere Ankopplung an die Polymermatrix zu erzielen. Sie können beispielsweise mit einem Haftvermittlersystem auf Basis funktionalisierter Silane ausgerüstet sein.

Das mittlere Aspektverhältnis (Durchmesser zu Dicke) der teilchenförmigen Füllstoffe liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Die teilchenförmigen Füllstoffe können bedingt durch die Verarbeitung zur Formmasse bzw. zu Formkörpern in der Formmasse bzw. im Formkörper einen kleineren d₉₅-bzw. d₅₀-Wert aufweisen, als die ursprünglich eingesetzten Füllstoffe.

### Komponente D

Die Zusammensetzung enthält als Komponente D handelsübliche Polymeradditive. Als handelsübliche Polymeradditive gemäß Komponente D kommen Additive wie beispielsweise interne und externe Gleit- und Entformungsmittel (beispielsweise Pentaerythrittetrastearat, Montanwachs oder Polyethylenwax), Leitfähigkeitsadditive (beispielsweise Leitruß oder Carbon Nanotubes), UV/Licht-Schutzmittel, Stabilisatoren (beispielsweise, Thermostabilisatoren, Nukleierungsmittel (z.B. Natriumphenylphosphinat, Aluminiumoxid, Siliziumdioxid, Salze aromatischer Carbonsäuren), Antioxidantien, Umesterungsinhibitoren, Hydrolyseschutzmittel), kratzfestigkeitsverbessernde Additive (beispielsweise Silikonöle), IR-Absorbentien, optische Aufheller, fluoreszierende Additive, sowie Farbstoffe und Pigmente (beispielsweise Titandioxid, Ultramarinblau, Eisenoxid, Ruß, Phthalocyanine, Chinacridone, Perylene, Nigrosin und Anthrachinone) und Füll- und Verstärkungsstoffe verschieden von Komponente C), oder aber Mischungen mehrerer der genannten Additive in Frage.
Die erfindungsgemäßen Zusammensetzungen enthalten mindestens ein Entformungsmittel, vorzugsweise Pentaerythrittetrastearat, und mindestens einen Stabilisator, vorzugsweise ein phenolisches Antioxidanz und/oder einen organischen Phosphorigsäureester.

In einer bevorzugten Ausführungsform enthält die Zusammensetzung als Komponente D mindestens einen Zusatzstoff ausgewählt aus der Gruppe, die, Gleit-und Entformungsmittel, UV/Licht-Schutzmittel, , Stabilisatoren, Antistatika, Farbstoffe, Pigmente und Füll- und Verstärkungsstoffe verschieden von Komponente C) umfaßt.

Weiter bevorzugt wird eine Stabilisatorkombination aus mindestens zwei Stabilisatoren eingesetzt, wobei der zweite Stabilisator eine brönstedt-saure Verbindung enthält. Vorzugsweise handelt es sich bei dem zweiten Stabilisator um phosphorige Säure oder saure Phosphate, z.B. Calciummonophosphat.

Die Additive können alleine oder in Mischung bzw. in Form von Masterbatchen eingesetzt werden.

Die vorliegende Erfindung betrifft weiterhin aus den oben genannten Zusammensetzungen hergestellte Formteile, vorzugsweise flächige Formteile wie Platten und Karosserieteile wie Spiegelgehäuse, Kotflügel, Spoiler, Hauben, etc.

Die Herstellung der erfindungsgemäßen Zusammensetzungen erfolgt nach an sich bekannten Verfahren durch Mischen der Komponenten. Es kann vorteilhaft sein, einzelne Komponenten vorzumischen. Vorzugsweise geschieht das Mischen der Komponenten A bis D sowie optional weiterer Bestandteile bei Temperaturen von 220 bis 330°C durch gemeinsames Kneten, Extrudieren oder Verwalzen der Komponenten.

Die erfindungsgemäßen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien Platten genannt.

Die Formteile können klein- oder großteilig sein und für Außen- oder Innenanwendungen eingesetzt werden. Bevorzugt werden großteilige Formteile für den Fahrzeugbau, insbesondere den Automobilsektor hergestellt. Insbesondere können aus den erfindungsgemäßen Formmassen Karosserieaußenteile wie z.B. Kotflügel, Heckklappen, Motorhauben, Stoßstangen, Ladeflächen, Abdeckungen für Ladeflächen, Autodächer oder andere Karosserieanbauteile gefertigt werden.

Formteile bzw. Halbzeuge aus den erfindungsgemäßen Formmassen/Zusammensetzungen können sich auch im Verbund mit weiteren Werkstoffen wie z.B. Metall oder Kunststoff befinden. Nach einer eventuellen Lackierung von z.B. Karosserieaußenteilen können sich Lackschichten direkt auf den erfindungsgemäßen Formmassen und/oder auf den im Verbund eingesetzten Werkstoffen befinden. Die erfindungsgemäßen Formmassen bzw. die Formteile/Halbzeuge aus den erfindungsgemäßen Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkststoffen oder sich selbst für die Herstellung von Fertigteilen wie z.B. Karosserieaußenteilen eingesetzt werden.

Die erfindungsgemäßen Formmassen können auch für zahlreiche weitere Anwendungen verwendet werden. Beispielsweise seien genannt die Verwendung in der Elektrotechnik oder im Bausektor. In den genannten Einsatzgebieten können Formteile aus den erfindungsgemäßen Formmassen zum Beispiel als Lampenabdeckungen, als Spulenkörper, als Sicherheitsscheiben, als Gehäusematerial für elektronische Geräte, als Gehäusematerial für Haushaltsgeräte, als Platten zur Herstellung von Abdeckungen verwendet werden.

Die erfindungsgemäßen Zusammensetzungen zeichnen sich durch eine ausgezeichnete Wärmeformbeständigkeit und Wärmeformstabilität aus. Die erfindungsgemäßen Zusammensetzungen weisen zusätzlich einen geringen CLTE , in Kombination mit guter Schlagzähigkeit, hohem E-Modul, guter Fließfȧhigkeit, hoher Wärmeformbeständigkeit und reduziertem Schwindungsverhalten bei der thermoplastischen Verarbeitung.

### Beispiele

### Komponente A

Lineares Polycarbonat auf Basis Bisphenol-A mit einer relativen Lösungsviskosität (ηᵣₑₗ) (gemessen an Lösungen von 0,5 g Polycarbonat in 100 ml Methylenchlorid bei 25°C) von 1,255.

### Komponente B

Polyethylenterephthalat (z.B. PET der Fa. Invista, Deutschland) mit einer intrinsischen Viskosität von 0,623 dl/g, gemessen in Dichloressigsäure in einer Konzentration von 1 Gew.-% bei 25°C.

### Komponente C

Talk mit einem mittleren Partikeldurchmesser D₅₀ von 1,2 µm und einem D₉₅ von 3,5 µm gemessen mittels Sedigraph und mit einem Al₂O₃-Gehalt von 0,5 Gew.-%.

### Komponente D-1

Pentaerythrittetrastearat als Gleit-/Entformungsmittel

### Komponente D-2

Montansäureesterwachs als Gleit-/Entformungsmittel

### Komponente D-3

Thermostabilisatoren

### Komponente D-4

Umesterungsinhibitoren

### Herstellung der Formmassen

Die erfindungsgemäßen Formmassen, enthaltend die Komponenten A bis D werden hergestellt auf einem Doppelwellenextruder ZSK25 der Fa. Coperion, Werner und Pfleiderer (Deutschland) bei Schmelzetemperaturen von 250°C bis 300°C.

### Herstellung der Prüfkörper und Prüfung

Die aus der jeweiligen Compoundierung resultierenden Granulate wurden auf einer Spritzgussmaschine (Fa. Arburg) bei einer Schmelzetemperatur von 270°C und einer Werkzeugtemperatur von 70°C zu Probekörpern verarbeitet.

Die **Schmelzefließfähigkeit** (MVR) wird beurteilt anhand der Schmelzevolumenfließrate (MVR) gemessen gemäß ISO 1133 bei einer Temperatur von 270°C und mit einer Stempellast von 5 kg.

Die **Schmelzeviskosität** wurde nach ISO 11443 bei einer Temperatur von 270°C und einer Scherrate von 1000 s⁻¹ bestimmt.

Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.

Die Bestimmung der **Kerbschlagzähigkeit** (aₖ) und der **Schlagzähigkeit** (aₙ) erfolgt gemäß ISO 180/1A, bzw. ISO 180/1U bei Raumtemperatur (23°C) durch eine 10-fach-Bestimmung an Prüfstäben der Abmessung 80 mm x 10 mm x 4 mm.

Die **Reißdehnung** und der **Zug E-Modul** wird ermittelt bei Raumtemperatur (23°C) in Anlehnung an ISO 527-1,-2 an Schulterstäben der Abmessung 170 mm x 10 mm x 4 mm.

Die Gesamtenrgieaufnahme im Durchstossversuch wird ermittelt bei Raumtemperatur (23°C) nach ISO 6603-2 durch eine 10-fach-Bestimmung an Prüfplatten der Abmessung 60 mm x 60 mm x 2 mm.Der **lineare thermische Ausdehnungskoeffizient (CLTE)** wird ermittelt nach DIN 53752 im Temperaturintervall von 23°C bis 80°C an einem Prüfkörper der Abmessungen 60 mm x 60 mm x 2 mm, jeweils parallel und senkrecht zur Schmelzefließrichtung bei der Prüfkörperherstellung.

Die **Gesamtschwindung** wird ermittelt in Anlehnung an ISO 2577 an Prüfplatten der Abmessung 150 mm x 105 mm x 3 mm. Die Herstellung der spritzgegossenen Prüfplatten erfolgte bei einer Massetemperatur von 270°C, einer Werkzeugtemperatur von 70°C und einer Nachdruckhöhe von 600 bar. Zur Ermittlung der Gesamtschwindung wurden die Platten 1 Stunde bei 90°C konditioniert. Die Gesamtschwindung setzt sich aus Verarbeitungsschwindung und Nachschwindung zusammen.

Die folgenden Beispiele dienen der weiteren Erläuterung der Erfindung

**Tabelle 1**

| | | | | **Bsp. 1 Teile** | **Bsp. 2 Teile** | **Bsp. 3 Teile** | **Bsp. 4 Teile** | **Bsp. 5 Teile** |
|---|---|---|---|---|---|---|---|---|
| | | | Komponente A | 60,12 | 60,12 | 60,12 | 60,12 | 60,12 |
| | | | Komponente B | 22,70 | 22,70 | 22,70 | 22,70 | 22,70 |
| | | | Komponente C | 5,00 | 10,00 | 15,00 | 20,00 | 25,00 |
| | | | Komponente D-1 | 0,17 | 0,17 | 0,17 | 0,17 | 0,17 |
| | | | Komponente D-2 | 0,40 | 0,40 | 0,40 | 0,40 | 0,40 |
| | | | Komponente D-3 | 0,30 | 0,30 | 0,30 | 0,30 | 0,30 |
| | | | Komponente D-4 | 1,31 | 1,31 | 1,31 | 1,31 | 1,31 |

| **Prüfung** | **Norm** | **Bedingung** | **Einheit** | | | | | |
|---|---|---|---|---|---|---|---|---|
| MVR | ISO 1133 | 270°C/5kg | cm³/10min | 64 | 51 | 46 | 40 | 34 |
| Schmelzeviskosität | ISO 11443 | 270°C / 1000 s-1 | Pas | 179 | 194 | 196 | 209 | 219 |
| Vicat B | ISO 306 | 50 N/120 K/h | °C | 136 | 138 | 139 | 140 | 142 |
| Izod-Kerbschlagzähigkeit | ISO 180/1A | 23°C | kJ/m² | 5,4 | 5,2 | 5,2 | 5,1 | 4,8 |
| Izod-Schlagzähig keit | ISO 180/ 1U | 23°C | kJ/m² | 72 | 67 | 54 | 40 | 39 |
| Zug E-Modul | ISO 527-1,-2 | 23°C | N/mm² | 3299 | 3896 | 4517 | 5213 | 5918 |
| Reißdehnung | ISO 527-1,-2 | 23°C | % | 11,6 | 5,7 | 3,4 | 3,0 | 2,1 |
| Gesamtenerg ie Durchstossversuch | ISO 6603-2 | 23°C | J | 42,7 | 40,7 | 35,4 | 22,7 | 14 |
| CLTE | DIN 53752 | parallel | ppm*K⁻¹ | 60 | 53 | 44 | 38 | 37 |
| | | senkrecht | ppm*K⁻¹ | 61 | 55 | 49 | 44 | 41 |
| Gesamtschwindung | i.Anlehnung an ISO 2577 | T_{M} 270°C / T_{W} 70°C / ND 600 bar / Konditionierung 1 h bei 90°C* | | | | | | |
| | | Breitenschwindung | % | 0,737 | 0,674 | 0,613 | 0,561 | 0,504 |
| | | Längenschwindung | % | 0,667 | 0,607 | 0,556 | 0,524 | 0,460 |

| | | | | | | | | |
|---|---|---|---|---|---|---|---|---|
| * T_{M} = Massetemperatur, T_{W} = Werkzeugtemperatur, ND = Nachdruckhöhe | | | | | | | | |

Aus Tabelle 1 geht hervor, dass die erfindungsgemäßen Formmassen eine ausgezeichnete Wärmeformbeständigkeit (Vicat) in Verbindung mit guter Fließfähigkeit (MVR), hoher Schlagzähigkeit (Izod), hohem E-Modul und hoher Energieaufnahme im Durchstoßtest aufweisen, und einen unerwartet niedrigen CLTE zeigen.

Der CLTE der erfindungsgemäßen Formmassen in Längs- bezogen zur Querrichtung hat vorzugsweise eine Abweichung von max. 20 %, weiter bevorzugt 15 %.

Die erfindungsgemäßen Formmassen weisen vorzugsweise einen CLTE (quer) von 40 bis 65 ppm/K, weiter bevorzugt von 42 - 60 ppm/K auf.

Die erfindungsgemäßen Formmassen weisen vorzugsweise einen CLTE (längs) von 35 bis 65 ppm/K, weiter bevorzugt von 37,5 - 55 ppm/K auf.

Die erfindungsgemäßen Formmassen weisen vorzugsweise ein E-Modul von mindestens 3500 N/mm², weiter bevorzugt von maximal 5500 N/mm² auf.

Die erfindungsgemäßen Formmassen weisen vorzugsweise einen MVR (270°C, 5kg, 4 min Vorwärmzeit) von mindestens 30, weiter bevorzugt von mindestens 40, und noch weiter bevorzugt von maximal 65cm³/10min auf.

Darüber hinaus erfüllen sie die an thermoplastische Formmassen für großflächige Karosserieaußenteile gestellten Anforderungen im Bezug auf Steifigkeit (Zugmodul), Dehnbarkeit (Reißdehnung), thermische Ausdehnung (linearer thermischer Ausdehnungskoeffizient), Fließfähigkeit in der Schmelze (MVR) und Lackierbarkeit (Oberflächenqualität).

## Patentansprüche

1. Zusammensetzung enthaltend
A) 50 bis 70 Gew.-Teile, mindestens ein aromatisches Polycarbonat,
B) 16 bis 30 Gew.-Teile, mindestens ein Polyalkylenterephthalat,
C) 4 bis 30 Gew.-Teile, mindestens einen mineralischen Füllstoff auf Basis von Talk,
D) 0,1 - 8,0 Gew.-Teile Additive
wobei die Komponente D mindestens ein Entformungsmittel und mindestens einen Stabilisator enthält
und wobei die Summe der Gewichtsteile der Komponenten A-D 100 ergibt.

2. Zusammensetzung gemäß Anspruch 1, **dadurch gekennzeichnet, dass** die Zusammensetzung frei von kautschukmodifizierten Pfropfpolymerisaten ist.

3. Zusammensetzung gemäß Anspruch 1 oder 2, **dadurch gekennzeichnet, dass** die Zusammensetzung frei von Vinyl(Co)polymerisaten, insbesondere SAN (Styrol-Acrylnitril) ist.

4. Zusammensetzung bestehend aus
A) 50 bis 70 Gew.-Teile mindestens ein aromatisches Polycarbonat,
B) 16 bis 30 Gew.-Teile, mindestens ein Polyalkylenterephthalat,
C) 4 bis 30 Gew.-Teile mindestens einen mineralischen Füllstoff auf Basis von Talk,
D) 0,1 - 8,0 Gew.-Teile Additive ausgewählt aus der Gruppe, die interne und externe Gleit- und Entformungsmittel , Leitfähigkeitsadditive, UV/Licht-Schutzmittel, Stabilisatoren, kratzfestigkeitsverbessernde Additive, IR-Absorbentien, optische Aufheller, fluoreszierende Additive, Farbstoffe und Pigmente sowie Füll- und Verstärkungsstoffe verschieden von Komponente C umfasst sowie Mischungen dieser Aditive und,
wobei die Komponente D mindestens ein Entformungsmittel und mindestens einen Stabilisator enthält
und wobei die Summe der Gewichtsteile der Komponenten A-D 100 ergibt.

5. Zusammensetzung gemäß einem der vorhergehenden Ansprüche, **dadurch gekennzeichnet**, die Komponente D ausgewählt ist aus der Gruppe, die Gleit-und Entformungsmittel, UV/Licht-Schutzmittel, Stabilisatoren, Antistatika, Farbstoffe und Pigmente sowie Füll- und Verstärkungsstoffe verschieden von Komponente C) umfasst und wobei die Komponente D mindestens ein Entformungsmittel und mindestens einen Stabilisator enthält.

6. Zusammensetzung gemäß einem der vorhergehenden Ansprüche, **dadurch gekennzeichnet, dass** Komponente B) in 21-25 Gew.-Teilen enthalten ist.

7. Zusammensetzung gemäß einem der vorhergehenden Ansprüche, **dadurch gekennzeichnet, dass** Komponente C) in 9-21 Gew.-Teilen enthalten ist.

8. Zusammensetzung gemäß einem der vorhergehenden Ansprüche, **dadurch gekennzeichnet, dass** das Gewichtsverhältnis von Komponente C zu Komponente B von 1:1 bis 1:2,5 ist.

9. Zusammensetzung nach einem der vorhergehenden Ansprüche, **dadurch gekennzeichnet, dass** Komponente C) eine obere Korngröße d₉₅ bestimmt nach Sedimentationsanalyse gemäß ISO 13317-3 kleiner 10 µm aufweist.

10. Zusammensetzung gemäß einem der vorhergehenden Ansprüche, **dadurch gekennzeichnet, dass** die Formmassen einen CLTE (quer) von 40 bis 65 ppm/K gemäß DIN 53752 im Temperaturintervall von 23°C bis 80°C aufweisen.

11. Zusammensetzung gemäß einem der vorhergehenden Ansprüche, **dadurch gekennzeichnet, dass** der CLTE gemäß DIN 53752 im Temperaturintervall von 23°C bis 80°C der Formmassen in Längs- bezogen zur Querrichtung vorzugsweise eine Abweichung von max. 20 % hat.

12. Zusammensetzung gemäß einem der vorhergehenden Ansprüche, **dadurch gekennzeichnet, dass** die Formmassen ein E-Modul bestimmt nach ISO 527-1,-2 von mindestens 3500 N/mm² und maximal 5500 N/mm² aufweisen.

13. Zusammensetzung gemäß einem der vorherigen Ansprüche, **dadurch gekennzeichnet, dass** die Zusammensetzungen frei ist von Carbonfasern.

14. Verwendung der Zusammensetzung nach einem der Ansprüche 1 bis 14 zur Herstellung von spritzgegossenen oder thermogeformten Formkörpern.

15. Formkörper hergestellt aus der Zusammensetzung nach einem der Ansprüche 1 bis 13.

## Claims

1. Composition comprising
A) 50 to 70 parts by weight of at least one aromatic polycarbonate,
B) 16 to 30 parts by weight of at least one polyalkylene terephthalate,
C) 4 to 30 parts by weight of at least one mineral filler based on talc,
D) 0.1 - 8.0 parts by weight of additives,
with component D comprising at least one mould release agent and at least one stabilizer
and with the sum of the parts by weight of components A-D making 100.

2. Composition according to Claim 1, **characterized in that** the composition is free from rubber-modified graft polymers.

3. Composition according to Claim 1 or 2, **characterized in that** the composition is free from vinyl (co)polymers, more particularly SAN (styreneacrylonitrile) .

4. Composition consisting of
A) 50 to 70 parts by weight of at least one aromatic polycarbonate,
B) 16 to 30 parts by weight of at least one polyalkylene terephthalate,
C) 4 to 30 parts by weight of at least one mineral filler based on talc,
D) 0.1 - 8.0 parts by weight of additives selected from the group consisting of internal and external lubricants and mould release agents, conductivity additives, UV/light stabilizers, stabilizers, scratch resistance-improving additives, IR absorbers, optical brighteners, fluorescent additives, dyes and pigments and also fillers and reinforcing agents different from component C, and also mixtures of these additives, and
with component D comprising at least one mould release agent and at least one stabilizer
and with the sum of the parts by weight of components A-D making 100.

5. Composition according to any of the preceding claims, **characterized in that** component D is selected from the group consisting of lubricants and mould release agents, UV/light stabilizers, stabilizers, antistats, dyes and pigments and also fillers and reinforcing agents different from component C), with component D comprising at least one mould release agent and at least one stabilizer.

6. Composition according to any of the preceding claims, **characterized in that** component B) is present at 21-25 parts by weight.

7. Composition according to any of the preceding claims, **characterized in that** component C) is present at 9-21 parts by weight.

8. Composition according to any of the preceding claims, **characterized in that** the weight ratio of component C to component B is from 1:1 to 1:2.5.

9. Composition according to any of the preceding claims, **characterized in that** component C) has an upper particle size d₉₅ determined after sedimentation analysis according to ISO 13317-3 of less than 10 µm.

10. Composition according to any of the preceding claims, **characterized in that** the moulding compounds have a CLTE (transverse) of 40 to 65 ppm/K according to DIN 53752 in the temperature interval from 23°C to 80°C.

11. Composition according to any of the preceding claims, **characterized in that** the CLTE according to DIN 53752 in the temperature interval from 23°C to 80°C of the moulding compounds in longitudinal relative to transverse direction preferably has a deviation of max. 20%.

12. Composition according to any of the preceding claims, **characterized in that** the moulding compounds have a modulus of elasticity determined according to ISO 527-1,-2 of at least 3500 N/mm² and not more than 5500 N/mm².

13. Composition according to any of the preceding claims, **characterized in that** the composition is free from carbon fibres.

14. Use of the composition according to any of Claims 1 to 14 for producing injection-moulded or thermoformed mouldings.

15. Mouldings produced from the composition according to any of Claims 1 to 13.

## Revendications

1. Composition contenant
A) 50 à 70 parties en poids, d'au moins un polycarbonate aromatique,
B) 16 à 30 parties en poids d'au moins un poly(téréphtalate d'alkylène),
C) 4 à 30 parties en poids d'au moins une charge minérale à base de talc,
D) 0,1 à 8,0 partie(s) en poids d'additifs
le composant D contenant au moins un agent de démoulage et au moins un stabilisant et la somme des parties en poids des composants A à D donnant 100.

2. Composition selon la revendication 1, **caractérisée en ce que** la composition est exempte de polymères greffés modifiés par un caoutchouc.

3. Composition selon la revendication 1 ou 2, **caractérisée en ce que** la composition est exempte de (co)polymères vinyliques, en particulier de SAN (styrène-acrylonitrile).

4. Composition constituée de
A) 50 à 70 parties en poids d'au moins un polycarbonate aromatique,
B) 16 à 30 parties en poids d'au moins un poly(téréphtalate d'alkylène),
C) 4 à 30 parties en poids d'au moins une charge minérale à base de talc,
D) 0,1 à 8,0 partie(s) en poids d'additifs choisis dans le groupe qui comprend des agents lubrifiants et de démoulage internes et externes, des additifs de conductivité, des agents de protection contre les UV/la lumière, des stabilisants, des additifs améliorant la résistance aux rayures, des absorbants IR, des éclaircissants optiques, des additifs fluorescents, des colorants et des pigments ainsi que des charges et des matières de renforcement différent(e)s du composant C ainsi que des mélanges de ces additifs et,
le composant D contenant au moins un agent de démoulage et au moins un stabilisant et la somme des parties en poids des composants A à D donnant 100.

5. Composition selon l'une quelconque des revendications précédentes, **caractérisée en ce que** le composant D est choisi dans le groupe qui comprend des agents lubrifiants et de démoulage, des agents de protection contre les UV/la lumière, des stabilisants, des antistatiques, des colorants et des pigments ainsi que des charges et des matières de renforcement différent(e)s du composant C et le composant D contenant au moins un agent de démoulage et au moins un stabilisant.

6. Composition selon l'une quelconque des revendications précédentes, **caractérisée en ce que** le composant B) est contenu à raison de 21 à 25 parties en poids.

7. Composition selon l'une quelconque des revendications précédentes, **caractérisée en ce que** le composant C) est contenu à raison de 9 à 21 parties en poids.

8. Composition selon l'une quelconque des revendications précédentes, **caractérisée en ce que** le rapport pondéral du composant C au composant B est de 1:1 à 1:2,5.

9. Composition selon l'une quelconque des revendications précédentes, **caractérisée en ce que** le composant C) présente une granulométrie supérieure d₉₅, déterminée par analyse de sédimentation selon la norme ISO 13317-3, inférieure à 10 µm.

10. Composition selon l'une quelconque des revendications précédentes, **caractérisée en ce que** les masses moulées présentent un CDTL (coefficient de dilatation thermique linéique) (transversal) de 40 à 65 ppm/K selon la norme DIN 53752 dans l'intervalle de température de 23 °C à 80 °C.

11. Composition selon l'une quelconque des revendications précédentes, **caractérisée en ce que** le CDTL selon la norme DIN 53752 dans l'intervalle de température de 23 °C à 80 °C des masses moulées en direction longitudinale par rapport à la direction transversale possède de préférence un écart de maximum 20 %.

12. Composition selon l'une quelconque des revendications précédentes, **caractérisée en ce que** les masses moulées présentent un module E, déterminé selon la norme ISO 527-1,-2, d'au moins 3 500 N/mm² et de maximum 5 500 N/mm².

13. Composition selon l'une quelconque des revendications précédentes, **caractérisée en ce que** les compositions sont exemptes de fibres de carbone.

14. Utilisation de la composition selon l'une quelconque des revendications 1 à 14 pour la préparation de corps moulés, moulés par injection ou thermoformés.

15. Corps moulés préparés à partir de la composition selon l'une quelconque des revendications 1 à 13.
